# EUROPÄISCHE PATENTSCHRIFT

(11) **EP 0 931 449 B1**
(45) Veröffentlichungstag und Bekanntmachung des Hinweises auf die Patenterteilung: **13.06.2001**
(21) Anmeldenummer: 98124689.5
(22) Anmeldetag: 24.12.1998
(51) Int. Cl.: A01F 15/07

(54) **Presse mit einer Wickelvorrichtung**
Press with a wrapping device
Presse avec dispositif d'enveloppage

(30) Priorität: 16.01.1998 US 8515
(43) Veröffentlichungstag der Anmeldung: 28.07.1999
(73) Patentinhaber: DEERE & COMPANY, Moline, Illinois 61265-8098 (US)
(72) Erfinder: Myers, Thomas Wilmer, Bettendorf, Iowa 52722 (US); Anstey, Henry Dennis, Ottumwa, Iowa 52501 (US); Mass, Nissim, Haemek (IL); Leiber, Yuval, D.A. Megido (IL); Doron, Ishai, Haemek 19236 (IL); Viaud, Jean, 70100 Gray (FR)
(74) Vertreter: Magin, Ludwig Bernhard

(56) Entgegenhaltungen:
- EP-A- 0 314 923
- US-A- 4 917 008
- US-A- 5 090 182

## Beschreibung

Die Erfindung betrifft eine Presse mit einer Wickelvorrichtung zum Umwickeln eines in einer Ballenbildungskammer gebildeten Ballens mit einem Wickelmaterial, das eine Breite aufweist oder einnehmen kann, die den Abstand zwischen den Seitenwänden um Randbereiche überschreitet.

Die US-A-4,917,008 lehrt die Verwendung eines Netzes in einer Rundballenpresse, das breiter ist als ein in der Rundballenpresse gebildeter Ballen. An den Seitenkanten ist ein elastischer Faden in das Netz eingearbeitet, der die entstandenen Randbereiche über die Stirnfläche des Rundballens zieht und somit dessen Kanten schützt. Das Netz wird während des Wickelvorgangs in die Ballenbildungskammer eingeführt und gleitet an der Innenfläche der Seitenwände entlang, bis der Rundballen aus der Ballenbildungskammer ausgeworfen wird.

Aus der EP-A1-0 314 923 geht eine Vorrichtung hervor, mit der eine doppellagige Folie auf einen Rundballen in einer Rundballenpresse aufgewickelt werden kann. Eine der Lagen ist in zwei Hälften geschlitzt, wobei jede Hälfte nach außen geschoben und unter der anderen Lage verstaut. Während eine Lage der Folie über eine Rolle in die Ballenpreßkammer eingeführt wird, gleiten die Kanten der beiden oben liegenden Lagenhälften an Rollen entlang und werden nach außen bewegt. Beide Lagen bleiben auf der Umfangsfläche des Rundballens liegen. Die jeweiligen Lagenhälften werden erst nach dem Auswurf des Rundballens über die Seitenbereiche gezogen und manuell zusammengefaßt. Die Lagenhälften dienen nicht dazu, die Seitenkanten des Rundballens zu fixieren und zu verdichten, sondern den Rundballen luftdicht abzuschließen.

Das der Erfindung zugrunde liegende Problem wird darin gesehen, daß das Netz nicht zuverlässig genug oder gar nicht über die Randbereiche gleitet.

Dieses Problem ist auf erfinderische Weise durch die Merkmale des Patentanspruchs 1 gelöst worden, wobei in den davon abhängigen Patentansprüchen vorteilhafte Weiterentwicklungen enthalten sind.

Auf diese Weise wird das Wickelmaterial, z. B. Netz oder Folie, in voller Breite der Ballenbildungskammer zugeführt und bereits während des Wickelvorgangs an die Stirnseite des Rundballens angelegt. Das Wickelmaterial gleitet unmittelbar in den Spalt zwischen dem Ballen und der Seitenwand. Demnach können abstehende Erntegutstengel oder sonstige Hindernisse nicht verhindern, daß das Wickelmaterial auf die Stirnseiten gleitet. Es ist zudem kein besonderes Wickelmaterial mit einem Spannfaden erforderlich, der die Randbereiche über die Stirnseiten spannt. Der Eintritt des Wickelmaterials kann an jeder geeigneten Stellen vorgesehen werden, wozu entweder eine Öffnung in der Seitenwand oder ein Spalt zwischen der Unterkante der Seitenwand und der Rolle benutzt wird.

Das Einführen von Wickelmaterial in den Spalt zwischen dem Ballen und der Seitenwand wird erleichtert, wenn der Ballen in dem Einführbereich von der Seitenwand wegbewegt wird und sich somit eine kleine Lücke ergibt. Dieses Abdrängen kann mittels Führungsplatten erreicht werden, die eine gewisse Dicke und somit einen Bereich aufweisen, der die Stirnseite des Ballens auf Abstand hält.

Die Spannkraft des Wickelmaterials auf dem Ballen kann dadurch erhöht werden, daß es auf seine volle Breite und gegebenenfalls bis zur Grenze seiner Elastizität gestreckt wird; dies wird mit Spreizrollen erreicht, die sich an oder auf den Enden der das Wickelmaterial führenden Rolle befinden.

Mittels eines die Rolle teilweise umfassenden gebogenen Randbereichs der Platte ist es möglich, die Kante des Ballens abzurunden, so daß das Wickelmaterial auf einem verdichteten Bereich aufliegt und sich nicht locker und auch bei der späteren Handhabung des Ballens nicht gelöst wird.

Das Wickelmaterial kann problemlos in die Ballenbildungskammer eintreten, wenn die Eintrittstelle geschützt, d. h. von einem Kanal gebildet wird, der sich in einem Spalt zwischen der Führungsplatte und der Seitenwand befindet. In diesem Kanal kann der Seitenbereich des Wickelmaterials entfaltet bzw. umgelenkt werden.

Eine zuverlässige Spreizbewegung des Wickelmaterials in der Axialrichtung wird mit nut- oder stegartigen Spiralelementen erreicht, die einzeln oder in Kombination angewandt werden können. Während Spiralnuten das Wickelmaterial mehr führen, wirken Spiralstege aggressiv auf es ein und bewegen es axial, insbesondere wenn zwischen der Außenkante der Spiralstege und einem benachbarten Bauteil nur ein geringer Abstand besteht und sich somit ein Kraftschluß ergibt.

Die Vorkehrung eines glatten Bereichs zwischen den Spiralstegen und/oder Spiralnuten, in den die Führungsplatte oder ein vergleichbares Element hineinragt, führt zu einer sicheren Anlage des Wickelmaterials an die Rolle bzw. die Spreizrolle einerseits, verhindert das Auftreffen von Erntegut andererseits und verringert schließlich die Wickelgefahr.

Ein einwandfreier Lauf des Wickelmaterials über die Rolle bzw. die Spreizrolle wird dadurch erreicht, daß Vorkehrungen getroffen werden, die jeglichen Materialaufbau verhindern, z. B. indem unterhalb der Spreizrolle keine Aufbauten, d. h. Rahmen, Schutze, Riemenführungen, etc. vorgesehen werden.

Der Ballen kann an der eine gewisse Breite einnehmenden Führungsplatte relativ reibungsfrei vorbeigeführt werden, wenn ein Leitelement vorgesehen wird, das aufgrund seiner Formgebung und/oder Lage einen Aufprall des Ballens verhindert und eine allmähliche Umlenkung bewirkt. Mit diesem Leitelement kann auch das Wickelmaterial und die Spreizrollen vor dem Auftreffen des Ballens oder Ernteguts geschützt werden.

Wenn Spiralnuten auf der der Ballenbildungskammer zugelegenen Seite des glatten Bereichs auf der Spreizrolle vorgesehen werden, wird dort die Gefahr vermieden oder zumindest herabgesetzt, daß sich Erntegut auf der Spreizrolle verfängt. Hingegen besteht diese Gefahr im axial außenliegenden Bereich der Spreizrollen nicht, so daß dort mit den Spiralstegen aggressiv auf das Wickelmaterial eingewirkt werden kann.

Wenn das Wickelmaterial z. B. von Riemen über eine längere Strecke transportiert wird, die über wenigstens zwei Rollen geführt werden, und diese Rollen mit Spreizrollen versehen sind, ist eine vollkommene Spreizung des Wickelmaterials an der Eintrittsstelle in die Ballenbildungskammer gewährleistet, so daß es dort nicht zu Umlenkproblemen kommt.

Eine kostengünstige und effektive Lösung, das Wickelmaterial auf der gesamten Länge seines Förderwegs auf in voller Breite zu fördern, ergibt sich daraus, daß die Seitenwände oberhalb des Förderwegs enden, z. B. oberhalb einer den Unterseiten der betroffenen Rollen gemeinsamen Tangente. Dies trifft sowohl auf Rollen zu, die Riemen oder Stabketten tragen, als auch auf Rollen, die wie bei einer Festkammerpresse an sich die Ballenformungsmittel darstellen.

Eine hervorragende Haftung des Wickelmaterials auf dem Ballen wird erzielt, wenn dieses gut gespannt ist, was z. B. bei einer Streckung von 15 % bei dem entsprechenden Netz der Fall ist.

Ein geeigneter Typ eines Wickelmaterials in der Form eines Netzes ist der aus gewirkten Thermoplastfäden.

Ein reibungsloser Eintritt des Wickelmaterials in die Ballenbildungskammer erfolgt jedenfalls dann, wenn scharfe Kanten und abrupte Umlenkungen vermieden werden; dieses Ziel wird z. B. mit Leitflächen erreicht, die das Wickelmaterial allmählich umlenken und eine geringe Flächenpressung hervorrufen.

Anstatt separate Führungsplatten insbesondere an der Innenseite der Seitenwand der Ballenbildungskammer anzubringen, kann die Seitenwand selbst auch entsprechend ausgebildet werden. Dies kann durch eine entsprechende Formgebung, d. h. durch Pressen oder Biegen, oder durch Einsatzstücke erreicht werden.

In der Zeichnung sind nachfolgend näher beschriebene Ausführungsbeispiele der Erfindung gezeigt. Es zeigt:
- Figur 1: eine Presse mit einer erfindungsgemäßen Wickelvorrichtung in Seitenansicht,
- Figur 2: die Wickelvorrichtung in vergrößerter Darstellung und in Seitenansicht,
- Figur 3: einen Blick in eine Ballenbildungskammer der Presse mit der Wickelvorrichtung und Führungsplatten in perspektivischer Ansicht,
- Figur 4: eine vergrößerte Darstellung von Führungsplatten im Bereich einer Rolle,
- Figur 5: eine rückwärtige Spreizrolle,
- Figur 6: eine vordere Spreizrolle,
- Figur 7: eine erste alternative Ausführungsform einer Führungsplatte und
- Figur 8: eine zweite alternative Ausführungsform einer Führungsplatte.

Zu Beginn sei darauf hingewiesen, daß verschiedene Komponenten als in Paaren existierend beschrieben werden, während nur eine von jedem Paar gezeigt ist, und daß dies so zu verstehen ist, daß die nicht gezeigte Komponente von der gleichen oder ähnlichen Beschaffenheit wie die gezeigte ist.

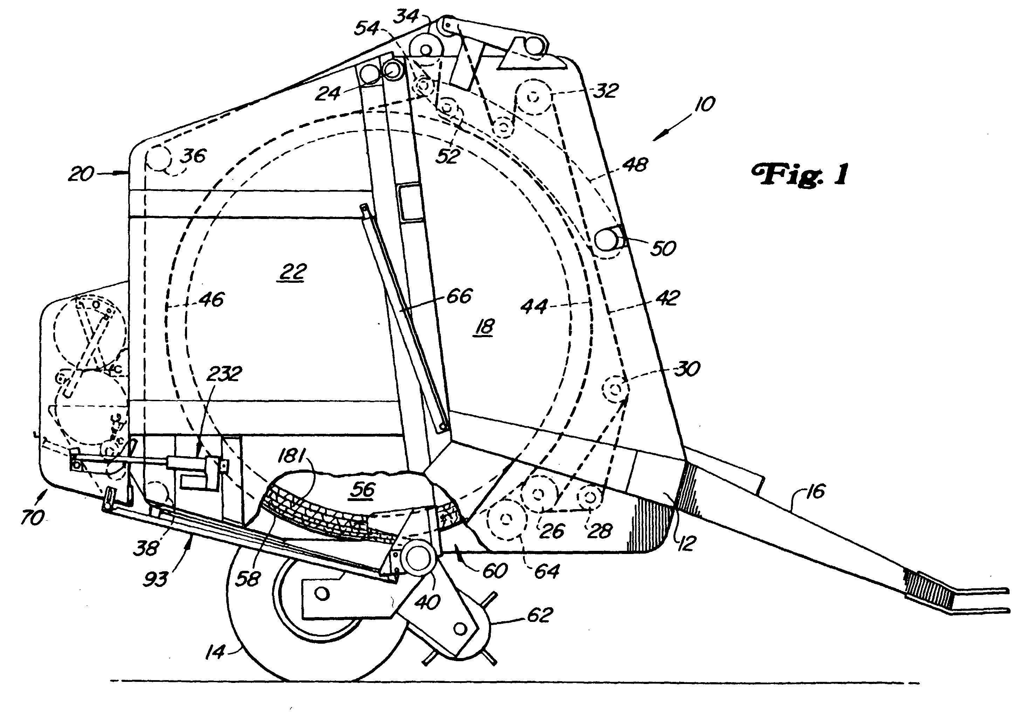

In Figur 1 ist eine Presse 10 des Typs gezeigt, der große zylindrische Ballen herstellt und der allgemein als eine große Rundballenpresse bezeichnet wird. Die Presse 10 enthält einen Rahmen 12, der von einem Paar Bodenräder 14 getragen wird, von denen nur das linke Bodenrad 14 gezeigt ist. Eine Deichsel 16, die so ausgebildet ist, daß sie an einen Ackerschlepper angeschlossen werden kann, ist an dem Rahmen 12 festgemacht. Ein Paar in der Querrichtung einen Abstand zueinander aufweisender Seitenwände 18 ist mit dem Rahmen 12 verbunden und besitzt rückwärtige aufrechte Endbereiche. Ein Ballenentladegatter 20 mit sich gegenüberliegenden Seitenwänden 22 ist in einem Schwenkanschluß 24 vertikal schwenkbar an oberen rückwärtigen Stellen der Seitenwände 18 angebracht, wobei die Seitenwände 22 vordere Endbereiche aufweisen, die gegen die rückwärtigen Endbereiche der Seitenwände 18 anschlagen, wenn sich das Ballenentladegatter 20 in einer unteren geschlossenen Stellung befindet, wie dies gezeigt ist.

Die Paare Seitenwände 18 und 22 nehmen die sich gegenüberliegenden Endbereiche einer Vielzahl von Stützrollen für die Riemen zum Bilden von Ballen auf, die sich nahe des Außenbereichs der Seitenwände 18, 22 befinden. Beginnt man an einer unteren mittigen Stelle der Seitenwände 18 und fährt man entgegen des Uhrzeigerdrehsinns fort, dann sind eine angetriebene Rolle 26, eine untere vordere Rolle 28, eine vordere Zwischenrolle 30, eine obere vordere Rolle 32 und eine obere rückwärtige Rolle 34 vorgesehen; und wenn man von einer oberen rückwärtigen Stelle der Seitenwände 22 des Ballenentladegatters 20 aus weiter entgegen dem Uhrzeigerdrehsinn verfährt, dann ist eine obere rückwärtige Rolle 36, eine untere rückwärtige Rolle 38 und eine untere vordere Rolle 40 montiert. Eine Vielzahl endloser Riemen 42 zum Bilden eines Ballens ist zwischen dem Paar Seitenwände 18 und 22 vorgesehen und Seite an Seite von den verschiedenen Rollen getragen. Mit der Ausnahme einiger Riemen 42, die die untere vordere Rolle 28 überspringen, sind die Riemen 42 so gebildet, daß sie nacheinander die Rollen 26, 28, 30, 32, 36, 38, 40 und 34 beaufschlagen. Ein vorderes Trum 44 der Riemen 42 erstreckt sich von der angetriebenen Rolle 26 nach oben zu der Rolle 34. In gleicher Weise erstreckt sich ein rückwärtiges Trum 46 der Riemen 42 von der unteren vorderen Rolle 40 des Ballenentladegatters 20 aus nach oben zu der Rolle 34. Vordere und rückwärtige Umlenkrollen 52 und 54, die einen geringen Abstand zueinander aufweisen, sind zwischen rückwärtigen Endbereichen eines Paares sich nach hinten erstreckender Spannarme 48, die bei 50 vertikal schwenkbar an einer Stelle in halber Höhe an den vorderen Seitenwänden 18 angebracht sind, montiert, wobei die Trume 44 und 46 mit den Seitenwänden 18 und 22 zusammenwirken, um eine ausdehnbare Ballenbildungskammer 56 zu bilden, die an ihrer Oberseite von den Umlenkrollen 52 und 54 geschlossen ist und sich hier in einem Zustand beträchtlicher Ausdehnung und mit einem Ballen 58 zeigt. Wenn die Ballenbildungskammer 56 leer ist, konvergieren das vordere und das rückwärtige Trum 44 bzw. 46 der Riemen 42 von der Antriebsrolle 26 und der unteren vorderen Rolle 40 des Ballenentladegatters 20 aus nach oben und verlaufen nahe beieinander zwischen den Rollen 52 und 54, wobei das Trum 44 eine rückwärtige Oberfläche der vorderen Rolle 52 berührt und wobei das Trum 46 die vordere Oberfläche der rückwärtigen Rolle 54 berührt, so daß die Ballenbildungskammer 56 von der Seite aus gesehen eine Keilform einnimmt. Der Boden der Ballenbildungskammer 56 ist mit einem Guteinlaß 60 versehen, der sich zwischen der angetriebenen Rolle 26 und der unteren vorderen Rolle 40 des Ballenentladegatters 20 erstreckt. Das Erntegut wird mittels einer Pick-Up 62 in den Guteinlaß 60 eingeführt, um zu einem Ballen, wie etwa dem Ballen 58, aufgerollt zu werden, und zwar infolge der Wirkung der vorderen und der rückwärtigen Trume 44 und 46 der Riemen 42, die jeweils so angetrieben werden, daß sie sich zu dem Guteinlaß 60 hin- und von diesem wegbewegen, und anfänglich auch von einer Starterrolle 64, die nahe der angetriebenen Rolle 26 in den Seitenwänden 18 drehbar aufgenommen ist und in der gleichen Richtung wie diese angetrieben wird, so daß sie Erntegut abstreift, das von dem vorderen Trum 44 der Riemen 42 nach unten mitgenommen wird. Wenn der Ballen 58 gebildet wird, vergrößert sich die Ballenbildungskammer 56 nachgebend bis zu der gezeigten vorbestimmten Größe, und zwar gegen die Kraft, die von einem Spannsystem in die Riemen 42 eingeleitet wird, das das Paar Spannarme 48 zusammen mit einem Paar nicht gezeigter Spannfedern und einem Paar nicht gezeigter Hydraulikzylinder einschließt, die zwischen die Seitenwände 18 und die Spannarme 48 eingefügt sind, um einer nach oben gerichteten Bewegung der Spannarme 48 in einer wohl bekannten Art und Weise zu widerstehen. Ein Paar Hydraulikzylinder 66 für das Ballenentladegatter 20 ist vorgesehen, um das Ballenentladegatter 20 um einen Schwenkanschluß 24 nach oben in eine offene Stellung zu schwenken, wenn dies gewünscht wird, um den Ballen 58 auf den Boden zu entladen.

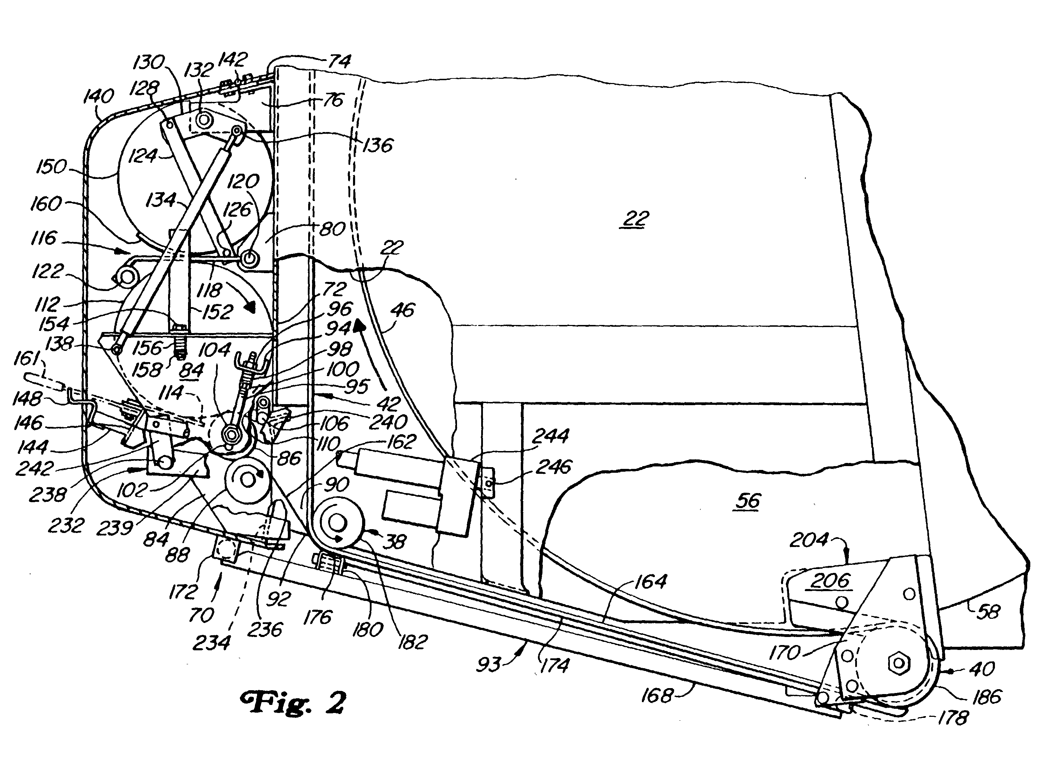

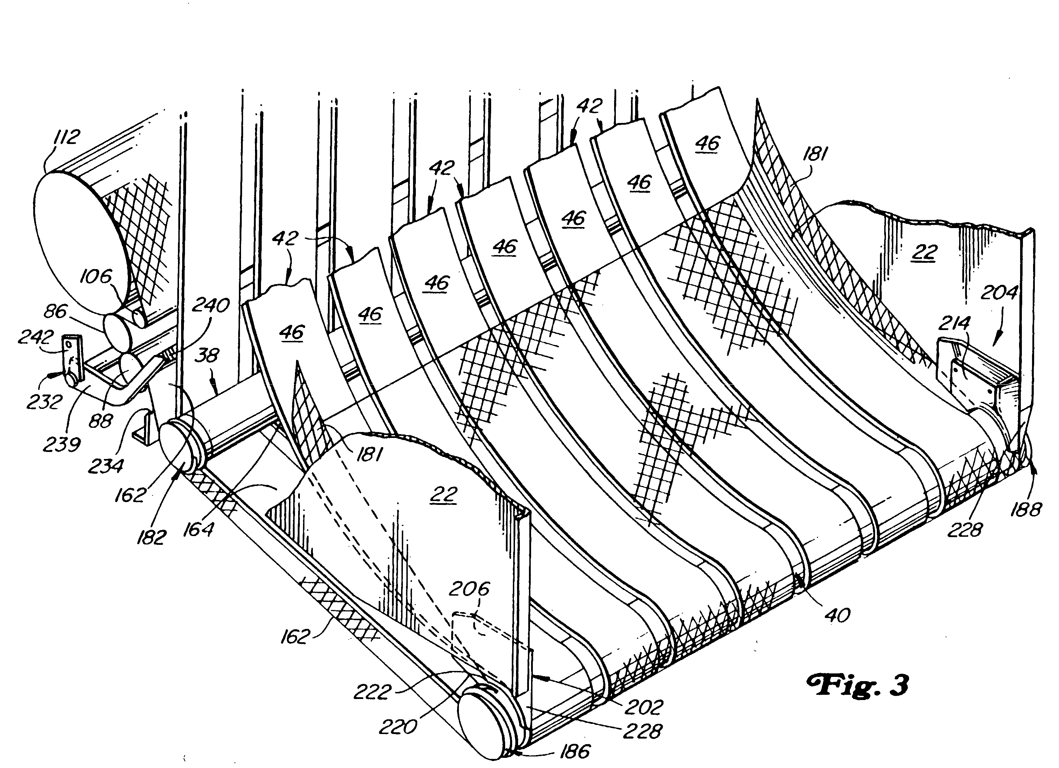

In den Figuren 2 und 3 ist eine Wickelvorrichtung 70 gezeigt, die an die Rückseite und den Boden des Ballenentladegatters 20 angebracht ist, um in der Ballenbildungskammer 56 gebildete Ballen, wie den Ballen 58, vor der Ablage auf dem Boden zu umwickeln. Es wird bemerkt, daß die Wickelvorrichtung 70 in der nachfolgend beschriebenen Weise konstruiert ist, um einen Streifen von einem als Netz ausgebildeten Wickelmaterial abzugeben, das eine Breite aufweist, die größer ist als die Breite der Ballenbildungskammer 56, und zwar in solch einem Maß, daß sich das Wickelmaterial über die Endkanten und äußere Abschlußbereiche der sich gegenüberliegenden Enden des Ballens 58 erstreckt. Während als Netz ausgebildetes Wickelmaterial verschiedenen Aufbaus benutzt werden kann, ist das bevorzugte Netz aus gewirkten, bzw. geknickten Streifen von thermoplastischem Wickelmaterial in Übereinstimmung mit der Lehre nach der US-A-5,104,714 gebildet. Während jedoch dieses Patent lehrt, einen Körper zu umwickeln, indem das Wickelmaterial um 30 - 50 % gestreckt wird, wenn es um den Körper gewickelt ist, wurde ermittelt, daß die vorliegende Erfindung ausreichend fest umwickelte Ballen 58 liefert, wenn das Wickelmaterial um nur 15 % während des Wickelns des Ballens gestreckt wird.

Die Wickelvorrichtung 70 enthält einen Tragrahmen, der auf der unteren Hälfte der Rückseite des Ballenentladegatters 20 montiert ist und eine quer verlaufende vertikale Wand 72 aufweist, die sich zwischen vertikalen Flanschen erstreckt und an diesen angebracht ist, die die rückwärtigen Enden der sich gegenüberliegenden Seitenwände 22 des Ballenentladegatters 20 bilden. Die Wand 72 besitzt einen oberen Endbereich, der von einem sich nach unten und hinten erstreckenden Flansch 74 gebildet wird. Entsprechende quer verlaufende Schenkel eines Paars winkelförmiger Halter 76 zum Tragen von Hebelarmen sind an oberen rechten und linken Bereichen der Wand 72 unterhalb des Flansches 74 angeschraubt. Ein Paar winkelartiger Stützen 80 zum Halten von Spannarmen ist mit einem vertikalen Abstand zu dem Paar Halter 76 nach unten vorgesehen und besitzt quer verlaufende Schenkel, die an die Wand 72 angeschraubt sind. Der Tragrahmen der Wickelvorrichtung 70 enthält ferner ein Paar sich längs erstreckender vertikaler Tragwände 84, die in der Seitenansicht ungefähr rechtwinklig sind und vordere vertikale Seiten aufweisen, die von quer verlaufenden Flanschen gebildet werden, die einen unteren Bereich der Wand 72 überlappen und mittels nicht gezeigten, Gewinde aufweisenden Befestigungsmitteln an den Aufbau im rückwärtigen Bereich des Ballenentladegatters 20 angebracht sind, um so in der Querrichtung einen Abstand zueinander aufzuweisen, der größer ist als der Abstand zwischen den Seitenwänden 22 des Ballenentladegatters 20, d. h. größer als die Breite der Ballenbildungskammer 56.

Ein Paar Zuführrollen 86 und 88 für das Wickelmaterial erstreckt sich zwischen den Tragwänden 84 und ist mit seinen gegenüberliegenden Endbereichen in diesen drehbar gelagert, wobei die Zuführrolle 86 gegenüber der Zuführrolle 88 nach oben und hinten versetzt angeordnet ist, und zwar derart, daß eine Flugbahn, die von einer Ebene definiert wird, die sich im Bereich des Spalts tangential mit Bezug auf die Zuführrollen 86, 88 erstreckt, unter der Wand 72 verläuft und auf ein vertikal verlaufendes Trum der Riemen 42 trifft, das sich zwischen der oberen und der unteren die Riemen 42 tragenden Rolle 36 bzw. 38 erstreckt. Die Flugbahn des Wickelmaterials schneidet die Riemen 42 an einer Stelle oberhalb einer Erfassungsstelle 90, die von einem Bereich einer Wickelmaterialführungswanne 92, die einen Teil eines Wickelmaterialführungszusammenbaus 93 bildet, und einem Bereich der Riemen 42 gebildet wird, der in Eingriff mit der unteren rückwärtigen Rolle 38 steht. Die obere Zuführrolle 86 für das Wickelmaterial ist so angeordnet, daß sie auf die untere Zuführrolle 88 für das Wickelmaterial zugespannt wird. Im einzelnen ist an der Außenseite jeder der Tragwände 84 ein U-förmiger Halter 94 angebracht. Die Gewindeenden eines Paars von ösenartigen Spannbügeln 95 verlaufen jeweils nach oben durch das Paar von Haltern 94 und werden in einer eingestellten Stellung mittels einer Mutter 96 gehalten. Eine als Spiralfeder ausgebildete Feder 98 ist auf jedem Spannbügel 95 unterhalb des zugeordneten Halters 94 angeordnet, und eine Mutter 100 belastet jede Feder 98 mit Bezug auf den zugeordneten Halter 94. Ein Haltebolzen 104, der dazu dient, die Zuführrolle 86 drehbar an dem Spannbügel 95 zu lagern und diese zu der unteren Zuführrolle 88 hin und von dieser weg zu bewegen, soweit es von Schlitzen 102 zugelassen wird, erstreckt sich durch die Öse jedes Spannbügels 95 und durch einen Schlitz 102 für Einstellzwecke in der benachbarten Tragwand 84. Eine Führungsrolle 106 für das Wickelmaterial ist an den unteren Enden eines Paars von Stegen 110 angeschlossen und erstreckt sich zwischen diesen, die an die Wände 84 an entsprechenden Stellen angebracht sind, die von der Zuführrolle 86 nach vorne und oben einen Abstand aufweisen.

Die obere Zuführrolle 86 ist vorzugsweise in der Art einer Metallrolle ausgebildet, die mit Gummi beschichtet ist, und wird, wie dies aus Figur 2 hervorgeht, entgegen der Uhrzeigerdrehrichtung angetrieben. Der Antrieb der Zuführrolle 86 ist in nicht gezeigter herkömmlicher Weise als Riemengetriebe mit einer variablen Riemenscheibe und einer Riemenscheibe ausgebildet, die auf einer Welle befestigt ist, die als eine Verlängerung der unteren Rolle 38 angeschlossen ist, so daß stets eine direkte Beziehung zwischen der Geschwindigkeit der Riemen 42 und der Umfangsgeschwindigkeit der Zuführrollen 86, 88 für das Wickelmaterial besteht, um somit eine relativ hohe Spannung in dem Wickelmaterial während des Umwickelns des Ballens 58 zu erzeugen, wobei diese Spannung idealerweise so hoch ist wie sie sein kann, ohne daß das Wickelmaterial reißt oder während der Handhabung des umwickelten Ballens 58 der Gefahr des Zerreißens unterliegt.

Eine sogenannte aktive, d.h. in Betrieb befindliche Materialrolle 112 wird zeitweise von einem Paar Rampen 114 getragen, die sich jeweils nach unten und vorne geneigt quer von den Tragwänden 84 weg erstrecken, und zwar an Stellen, die die Rampen 114 in eine Ebene versetzen, die sich geringfügig oberhalb der Drehachse der oberen Zuführrolle 86 erstreckt, wobei die Zuführrolle 86 als die hauptsächliche oder einzige Stütze für die Materialrolle 112 dient. Um die aktive Materialrolle 112 mit dem Wickelmaterial in Eingriff mit der Zuführrolle 86 zu drücken, ist eine Spannvorrichtung 116 vorgesehen, die ein Paar einen Querabstand zueinander aufweisender Arme 118 aufweist, deren vordere Endbereiche mittels eines Paars Bolzen 120 an das Paar Stützen 80 schwenkbar angebracht sind. Eine Rolle 122 ist drehbar in den rückwärtigen Endbereichen der Arme 118 aufgenommen und so angeordnet, daß sie sich im wesentlichen frei drehen kann und einen geringen Reibeingriff mit dem oberen rückwärtigen Quadranten der Materialrolle 112 beibehält, wenn die Materialrolle 112 kleiner wird, wenn das Wickelmaterial dazu benutzt wird, den Ballen 58 zu umwickeln. Die Spannvorrichtung 116 enthält ferner ein Paar Lenker 124, deren untere Endbereiche jeweils auf einem Paar Stifte 126, die an die Arme 118 angeschweißt sind, schwenkbar aufgenommen sind, und deren obere Endbereiche jeweils schwenkbar etwas mittels Stiften 128 an rückwärtige Schenkel eines Paars von Hebelarmen 130 angebracht sind, die jeweils selbst etwa mittels Bolzen 132 an das Paar Halter 76 schwenkbar angeschlossen sind. Eine nachgiebige Kraft zum Drücken der Rolle 122 gegen die Materialrolle 112 mit dem Wickelmaterial wird von einem Paar Kraftspeicher 134 in der Art von Gasdruckzylindern aufgebracht, deren Stangenenden jeweils etwa mittels eines Paares von Stiften 136 an vordere Schenkel des Paars von Hebelarmen 130 schwenkbar angebracht sind, und deren Zylinderenden jeweils etwa mittels eines Paars von Stiften 138 an gegenüberliegenden Seitenwänden eines Deckels 140 schwenkbar angeschlossen sind. Wie dies aus Figur 2 ersichtlich ist, besitzt der Deckel 140 eine obere Wand, die mittels eines Scharniers 142 an den Flansch 74 schwenkbar angebracht ist, was es erlaubt, daß der Deckel 140 aus einer unteren geschlossenen Stellung, wie sie in durchgezogenen Linien gezeigt ist und in der aufrechte vordere Enden der Seitenwände an der Rückseite des Ballenentladegatters 20 anliegen, nach oben in eine angehobene Stellung um einen Winkel geschwenkt wird, der ausgehend von der geschlossenen Stellung mehr als 90 Grad beträgt. Zusätzlich zu der Spannung der Rolle 122 gegen die Materialrolle 112 des Wickelmaterials ist der geometrische Zusammenhang zwischen der Wirkungslinie der Kraftspeicher 134 und den Stiften 132 der Hebelarme 130 derart, daß sich die Kraftspeicher 134 über eine Totpunktstellung bewegen und den Deckel 140 in seiner offenen Stellung gespannt halten. Der Deckel 140 wird mittels eines Riegels 144 lösbar in seiner geschlossenen Stellung gehalten, der in einer Öffnung eines winkelförmigen Riegelhalters 146 aufgenommen wird, der sich zwischen den Tragwänden 84 erstreckt und mit diesen verbunden ist. Ein Verriegelungshebel 148 ist an einer mittigen Stelle einer Rückwand des Deckels 140 schwenkbar angebracht und so bedienbar, daß er den Riegel 144 wahlweise aus oder in eine verriegelte Verbindung mit dem Riegelhalter 146 bewegt.

Eine Vorratsrolle 150 für das Wickelmaterial ist oberhalb und in unmittelbarer Nähe zu der Materialrolle 112 gelagert. Stützen zum Tragen der Vorratsrolle 150 enthalten ein Paar aufrechter Schenkel 152, die jeweils nach außen gewendete Endbereiche aufweisen, die an horizontalen Flanschen gesichert sind, die obere Seiten der Tragwände 84 bilden. Die Verbindung jedes Schenkels 152 mit der zugeordneten Tragwand 84 ist nachgiebig und wird mittels einer Schraube 154 hergestellt, die sich durch entsprechende Bohrungen in dem Schenkelende und dem Flansch der Tragwand 84 erstreckt und eine als eine Spiraldruckfeder ausgebildete Feder 156 trägt, die mittels einer Mutter 158 auf dem unteren Endbereich der Schraube 154 ortsfest gehalten wird. Eine einen Auflageboden 160 bildende Blechplatte, die entlang eines Kreisbogens gekrümmt ist, um so eine obere konkave Stützfläche oder Sattel zu bilden, auf der der rückwärtige untere Quadrant eines entsprechenden Endbereichs der Vorratsrolle 150 ruht, erstreckt sich von dem Schenkel 152 aus quer nach innen und ist an diesem befestigt, und zwar an einer Stelle, die einen Abstand von der Oberseite des Schenkels 152 aus nach unten aufweist.

Es wird bemerkt, daß es die nachgiebige Anbringung der Schenkel 152 erlaubt, daß, jeder von ihnen manuell um die von der Schraube 154 definierte vertikale Achse gedreht werden kann, wie dies während der Bewegung der Vorratsrolle 150 an den Ort der Materialrolle 112 gewünscht wird, sobald die Materialrolle 112 aufgebraucht ist. Im einzelnen wird zum Neupositionieren der Vorratsrolle 150 zunächst der Deckel 140 in seine offene Stellung angehoben und der leere Rollenkern der Materialrolle 112 entfernt. Ein Paar von Rollenladestützen 161, die als Leisten ausgebildet und jeweils schwenkbar an die Riegelhalter 146 angebracht sind, und zwar an Stellen, die einen Abstand zu gegenüberliegenden Seiten des Riegels 144 ungefähr auf der Höhe der Rampen 114 aufweisen, wird dann um aufrechte Achsen aus sich seitlich erstreckenden Wartestellungen, wie sie in durchgezogenen Linien dargestellt sind, in sich nach hinten erstreckende Tragestellungen geschwenkt. Es wird dann eine Länge des Wickelmaterials von der Vorderseite der Vorratsrolle 150 abgezogen und vor der Führungsrolle 106 nach unten und dann nach hinten über die Führungsrolle 106 und dann durch den Spalt zwischen den Zuführrollen 86 und 88 geführt. Die Vorratsrolle 150 wird dann auf die Rollenladestützen 161 abgesenkt. Die Schenkel 152 der endseitigen Stützen der Vorratsrolle 150 werden dann um 180 Grad gedreht, so daß sich die Auflageböden 160 nach außen erstrecken. Wenn die Auflageböden 160 aus dem Weg sind, werden die Arme 118 zusammen mit der Rolle 122, die den Druck anlegt, manuell in eine im wesentlichen vertikale Stellung angehoben, in der sie ihren Totpunkt überschritten haben und angehoben bleiben. Wenn die Rolle 122 aus dem Weg ist, kann die Vorratsrolle 150 über die ebenen Rampen 114 zu ihrem Ort auf der Zuführrolle 86 gerollt werden. Die Arme 118 werden dann abgesenkt, so daß die Rolle 122 die neue Materialrolle 112 berührt. Die Rollenladestützen 161 werden dann zurück in ihre Wartestellung gebracht, die Schenkel 152 werden in ihre Betriebsstellungen gebracht und der Deckel 140 wird geschlossen. Wenn es angebracht ist, wird die entfernte Vorratsrolle 150 dadurch ersetzt, daß wiederum der Deckel 140 geöffnet wird, die Rollenladestützen 161 in ihre Ladestellungen gebracht werden, eine neue Vorratsrolle 150 auf die Rollenladestützen 161 gerollt und die neue Vorratsrolle 150 von dort Endseite für Endseite, wenn dies gewünscht wird, auf die Auflageböden 160 gehoben wird. Der Deckel 140 wird dann in seine schließende Stellung abgesenkt.

Wie dies am besten aus Figur 2 ersichtlich ist, enthält der Wickelmaterialführungszusammenbau 93 einen Stützrahmen, der ein Paar von Rahmenteilen 168 aufweist, die von einem vorderen Paar von Trägern 170 aus nach hinten zu einem Paar rückwärtiger Träger 172 konvergieren. Die Träger 170 des vorderen Paars sind jeweils an unteren vorderen Stellen des Paars von Seitenwänden 22 befestigt und dienen dazu, Lagerträger für Lager zu tragen, die auf gegenüberliegenden Endbereichen der Rolle 40 vorgesehen sind. Das Paar rückwärtiger Träger 172 ist in einer bekannten und nicht dargestellten Weise mittels Streben, die sich durch Schlitze in dem Deckel 140 nach unten erstrecken, einstellbar an den Tragwänden 84 angebracht, wobei sich die Schlitze an Stellen befinden, die sich unterhalb sich gegenüberliegender Enden der unteren Zuführrolle 88 befinden. Unterhalb jedes einer Vielzahl von Riementrumen 164, die sich zwischen den Rollen 38 und 40 in der Längsrichtung erstrecken, befindet sich ein umgekehrter Schachtteil 174. Der rückwärtige Endbereich jedes Schachtteils 174 schlägt an einem umgekehrten U-förmigen Schachtteil 176 an und ist mit diesem verschweißt, der sich unmittelbar unterhalb der rückwärtigen Rolle 38 für die Riemen 42 befindet. Der vorderer Endbereich jedes Schachtteils 176 endet unmittelbar unterhalb der vorderen Rolle 40 und seine Flansche sind kreisförmig ausgespart, um auf die Oberseite eines zylindrischen Querteils 178 aufgesetzt, um mit diesem verschweißt werden zu können, und war an einer Stelle, die sich hinter der Rolle 40 befindet. Die gegenüberliegenden Endbereiche des Querteils 178 sind jeweils an das Paar vorderer Träger 170 angeschlossen. Die Wickelmaterialführungswanne 92 überragt obere Flächen jedes Schachtteils 174 und 176 und ist an diese angebracht und erstreckt sich von dem Schachtteil 176 aus nach hinten bis zu einer Stelle nahe der Rückseite des Ballenentladegatters 20. Das Wickelmaterial 162 erstreckt sich unterhalb der Rolle 38 und durch die Erfassungsstelle 90, die zwischen den Riemen 42 und der Wickelmaterialführungswanne 92 gebildet wird. Die oberen Flächen der Schenkel der umgekehrten Schachtteile 174 bilden gemeinsam eine Führungsfläche, die das Wickelmaterial 162 auf seine Länge in einem Bereich trägt, der sich zwischen der unteren rückwärtigen und der unteren vorderen Rolle 38 und 40 erstreckt, wobei die Riementrume 164 das Wickelmaterial 162 über den Guteinlaß 60 in die Ballenbildungskammer 56 transportieren, wo es von der Umfangsfläche des sich drehenden Ballens 58 erfaßt und um diesen gewickelt wird, der mit den Riemen 42 zusammenwirkt, um Wickelmaterial 162 von der Materialrolle 112 abzuziehen. Eine nach unten gebogene sich quer erstreckende Blattfeder 180 besitzt gegenüberliegende Endbereiche, die innerhalb der umgekehrten Schachtteile 176 untergebracht und schwenkbar gesichert sind, wobei der Mittelteil der Blattfeder 180 die führenden Rahmenteile 168 berührt. Die Blattfeder 180 dient dazu, die Wickelmaterialführungswanne 92 und die Schachtteile 174 in Anlage an den Riementrumen 164 zu halten, so daß der Abschnitt des Wickelmaterials 162 sicher von den Riementrumen 164 erfaßt und zu der Ballenbildungskammer 56 transportiert wird.

Es ist erforderlich, daß sich das Wickelmaterial 162 im wesentlichen über seine gesamte Breite erstreckt, wenn es um die untere vordere Rolle 40 gelangt, damit sich das Wickelmaterial 162 mit seinem Randbereich 181 über die Endbereiche des Ballens 58 erstreckt, wie dies in Figur 1 gezeigt ist. Obwohl einige Ballen 58 erfolgreich gewickelt wurden, ohne etwas anderes als herkömmliche, aber längere Rollen an den betreffenden Stellen der unteren rückwärtigen und unteren vorderen Rollen 38 und 40 zu benutzen, wird es vorgezogen, daß die gegenüberliegenden Enden dieser Rollen Vorrichtungen enthalten, die zuverlässig auf den Abschnitt des Wickelmaterials 162 einwirken, um sicherzustellen, daß es zu dem Zeitpunkt, in dem es in die Ballenbildungskammer 56 eintritt, seine ganze Breite einnimmt. Im einzelnen ist der Mittenbereich der unteren rückwärtigen Rolle 38, d. h. der Bereich, der sich zwischen den Seitenwänden 22 erstreckt und die Riemen 42 trägt, von herkömmlicher Ausführung, während die sich gegenüberliegenden Endbereiche der Rolle 38 von Verlängerungen gebildet werden, die die Form eines Paars rückwärtiger Spreizrollen einnehmen, von denen nur die rechte Spreizrolle 182 gezeigt ist. Die gegenüberliegenden Endbereiche der unteren vorderen Rolle 40 werden jeweils in gleicher Weise von Verlängerungen gebildet, die die Form eines vorderen Paars rechter und linker Spreizrollen 186 und 188 einnehmen. Es wird an dieser Stelle darauf hingewiesen, daß die linke Spreizrolle 188 mit der Spreizrolle 182 im wesentlichen identisch ist und daß die Spreizrolle 186 im wesentlichen identisch ist zu der Spreizrolle 188, wobei die Spreizrollen auf einer Seite der Presse 10 nur nachfolgend beschriebene Spiralen aufweisen, die von einer anderen Richtung sind als solche auf der anderen Seite der Presse 10.

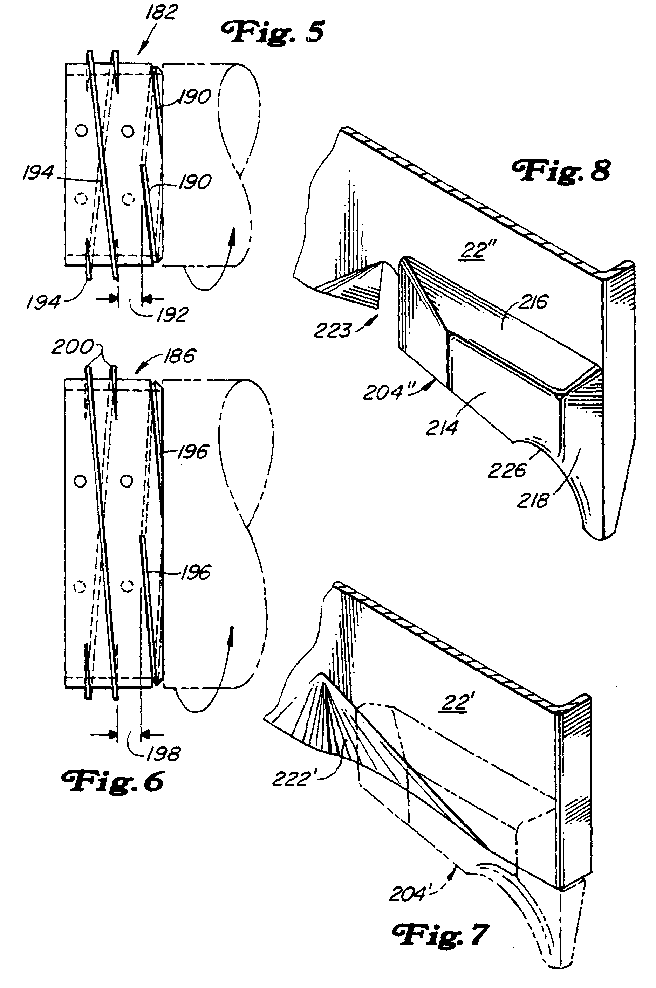

In Figur 5 ist die rückwärtige rechte Spreizrolle 182 gezeigt, und zwar in der Form eines zylindrischen Rohrs oder Hülse, die mit einem Paar von Spiralnuten 190 versehen sind, die an diametral gegenüberliegenden Stellen an den inneren Enden der Rolle beginnen und bei 180 Grad zu dem Anfangspunkt enden. Ein flacher ununterbrochener Bereich 192 erstreckt sich von den Spiralnuten 190 axial nach außen und wird von einem Paar getrennter Spiralstege 194 gefolgt, die im wesentlichen auf gegenüberliegenden Bereichen der Rolle angeordnet sind, wobei allerdings jeder Spiralsteg 194 gegenüberliegende Endbereiche enthält, die den mittleren Abschnitt des anderen Spiralstegs 194 überlappen und parallel zu diesem verlaufen. Die Steigung der Spiralnuten 190 und der Spiralstege 194 ist derart, daß sie dazu tendieren, die gegenüberliegenden Seiten des Abschnitts des Wickelmaterials 162 nach außen zu bewegen und zwar gegen jede Tendenz des Wickelmaterials 162, sich aufgrund der Spannung, die während der Ballenwicklung auf es ausgeübt wird, zu verschmälern.

Die vordere rechte Spreizrolle 186 ist in Figur 6 gezeigt und mit einem Paar von Spiralnuten 196, einem flachen Bereich 198 und einem Paar von Spiralstegen 200 versehen, die jeweils mit den Spiralnuten 190, dem flachen Bereich 192 und den Spiralstegen 194 der rückwärtigen rechten Spreizrolle 182 gleich sind.

Linke und rechte Führungsplatten 202 und 204, die jeweils an den Seitenwänden 22 in der Nähe der Spreizrollen 186 und 188 angebracht sind, wo der Abschnitt des Wickelmaterials 162 in den Guteinlaß 60 der Ballenbildungskammer 56 eintritt, wirken jeweils mit den vorderen rechten und linken Spreizrollen 186 und 188 zusammen, um sicherzustellen, daß der Abschnitt des Wickelmaterials 162 über die Ecken des Ballens 58 gebracht wird. Der Zweck der Führungsplatten 202 und 204 ist vierfach. Der erste Zweck ist, einen Freiraum an der Kante des Ballens 58 für die Einführung des Wickelmaterials 162 zu schaffen; der zweite Zweck ist, einen Kanal zu schaffen, durch den das Wickelmaterial 162 hindurch gelangen kann, um so den Freiraum zu erreichen, der im Eckbereich des Ballens 58 geschaffen ist; der dritte Zweck ist, die Kanten des zu wickelnden Ballens 58 abzurunden, so daß sich das Wickelmaterial 162 leichter darüber legt; und der vierte Zweck ist, Erntegut von der Spirale der Spreizrollen 186 und 188 wegzubewegen, so daß das Erntegut nicht mit der Materialzufuhr kollidiert. Die Führungsplatten 202 und 204 enthalten jeweils hauptsächlich ebene äußere Oberflächen 206 (Fig. 2 und 3), die jeweils flach an innere Flächen der Seitenwände 22 mittels angebrachter nicht gezeigter Befestigungsmittel angebracht sind, die sich durch ein Paar von Befestigungsöffnungen 208 erstrecken, die sich in der Mitte der Führungsplatten 202 und 204 erstrecken und sich mit entsprechenden Löchern in jeder der Seitenwände 22 und in den Trägern 170 decken. Es ist die Form einer nach innen zeigenden Oberfläche jeder der Führungsplatten 202 und 204, die den ersten Zweck erfüllt, nämlich, Freiraum für das Wickelmaterial 162 zu schaffen. Im Einzelnen enthält jede Führungsplatte 202 und 204 eine relativ dünne, obere, horizontale Kante 210 und eine vordere vertikale Kante 212, und zwar ausgehend davon, daß diese an den Seitenwänden 22 angebracht sind und sich der Ballen 58 in die Ballenbildungskammer 56 im Uhrzeigerdrehsinn dreht. Jede der Führungsplatten 202 und 204 enthält zudem eine innere Fläche, die von einem mittigen, am weitesten innen gelegenen Bereich 214 gebildet wird, der nach innen einen Abstand zu der Seitenwand 22 aufweist und zu dieser parallel angeordnet ist. Der Bereich 214 ist mittels einer nach innen und unten geneigten Fläche 216 an die obere Kante 210 jeder Führungsplatte 202 und 204 und mittels einer nach hinten und innen geneigten Fläche 218 an die vordere Kante 212 angeschlossen. Der innere Bereich 214 und die geneigten Flächen 216 und 218 jeder Führungsplatte 202 und 204 sind innerhalb der Ballenbildungskammer 56 angeordnet, um so einen radial außenliegenden Abschnitt des Endes des Ballens 58 zu berühren, wenn der betreffende Ballenabschnitt an den Führungsplatten 202 und 204 vorbeidreht. Dies führt dazu, daß die Eckbereiche der gegenüberliegenden Enden des Ballens 58 von den Seitenwänden 22 weggedrängt werden, um einen kleinen Freiraum oder Lücke zu schaffen, der wenigstens für eine kleine Entfernung rückwärtig über die Führungsplatten 202 und 204 hinaus erhalten bleibt.

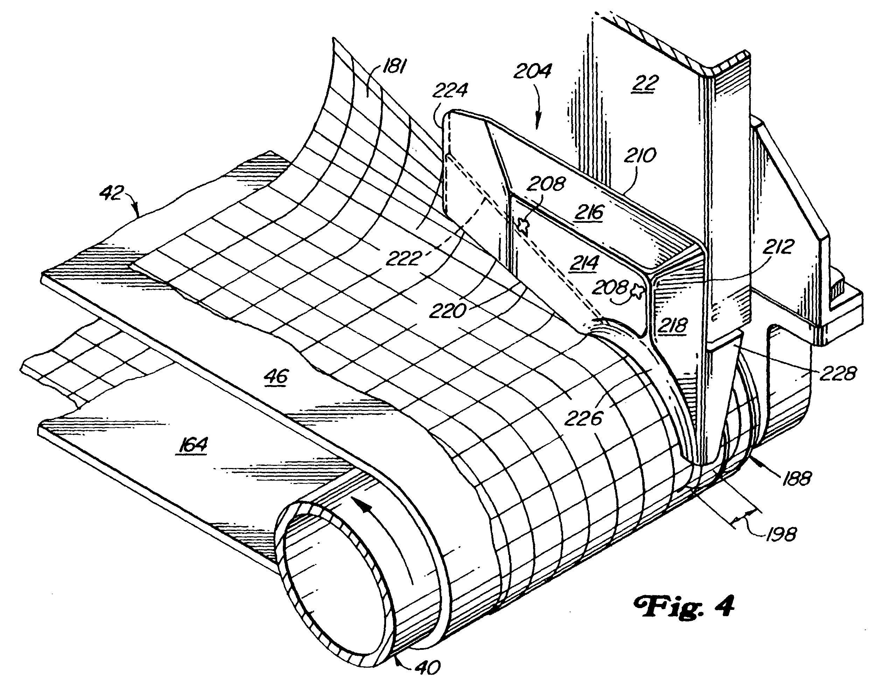

Die Führungsplatten 202 und 204 besitzen jeweils untere Kanten 220, die vordere Bereiche enthalten, die sich jeweils bogenförmig um die Spreizrollen 186 und 188 erstrecken, und zwar in einer sehr engen aber doch beabstandeten Weise zu dem flachen ununterbrochenen Bereich 198 der Spreizrollen 186, 188. Wie dies aus den Figuren 1 bis 4 hervorgeht, erstreckt sich die untere Kante 220 zwischen einer rückwärtigen Stelle in ungefähr 10-Uhr-Stellung und einer vorderen Stelle, die gewählt ist, um Erntegut, das von der Pick-up 62 zugeführt wurde, abzulenken und hier ungefähr in einer 3-Uhr-Stellung gezeigt ist, was praktischerweise der geringsten Entfernung entspricht, über die sich die Kante 220 erstrecken sollte. An einer Aussparung 222, die in der äußeren Oberfläche 206 jeder der Führungsplatten 202 und 204 von der unteren Kante 220 aus an einer Stelle nahe der 10-Uhr-Stellung der dazugehörigen Spreizrolle 186 und 188 nach oben und hinten geneigt zu einer rückwärtigen Kante 224 (Fig. 4) der Führungsplatte 202, 204 verläuft, ist ein Kanal oder Schacht zwischen der zugehörigen Seitenwand 22 und der Oberfläche 206 geschaffen, der zur Führung des Abschnitts des Wickelmaterials 162 in den Freiraum oder die Lücke vorgesehen und durch die Form der Innenseite jeder der Platten 202, 204 gebildet ist. Die Höhe jeder Aussparung 222 nimmt von vorne nach hinten zu.

Um den oben genannten dritten Zweck der Führungsplatten 202 und 204 zu erreichen, sind deren untere Kanten 220 in den Bereichen verdickt ausgebildet, die sich um die Spreizrollen 186 und 188 erstrecken, und sie besitzen auf einem Radius verlaufende Randbereiche 226, die sich auf einem Bogen um die entsprechende Spreizrolle 186 oder 188 erstrecken. Wenn sich der Ballen 58 mit seinen gegenüberliegenden Endseiten über die gebogenen Randbereiche 226 bewegt, werden die äußeren Kanten des Ballens 58 somit abgerundet.

Der oben genannte vierte Zweck der Führungsplatten 202, 204 wird mittels eines Leitelements 228, das als Abweiser oder Abstreifer funktioniert, erreicht, das sich von der vorderen vertikalen Kante 212 (Fig. 4) jeder Führungsplatte 202, 204 quer und nach außen erstreckt, um so eine Lage vor der dazugehörigen Spreizrolle 186 oder 188 einzunehmen, die die Wahrscheinlichkeit beseitigt oder verringert, daß sich Erntegut, das mittels der Pick-Up 62 durch den Guteinlaß 60 in die Ballenbildungskammer 56 geführt wird, um die Spreizrollen 186 und 188 wickelt, wo es mit der Zufuhr des Abschnitts des Wickelmaterials 162 kollidieren könnte. Die Leitelemente 228 sind hier in einer im wesentlichen dreieckigen Form in der Vorderansicht gezeigt, könnten aber jede andere Form aufweisen, die geeignet ist, die gewünschte Funktion zu erbringen.

Es wird an dieser Stelle darauf hingewiesen, daß zusätzlich zu den Spiralnuten 196 und den Leitelementen 228, die verhindern, daß das Erntegut mit dem Wickelmaterial 162 in die Quere kommt, wenn es um die Rolle 40 und insbesondere um den Teil der Rolle 40 gelangt, der die Spreizrollen 186 und 188 enthält, alle Tragteile für die Rolle 40 und die Führungsflächen für die Riemen 42, die sich in unmittelbarer Nähe des Bodens der Rolle 40 befinden, vermieden werden, um somit jede mögliche Ansammlung von Erntegut unterhalb der Rolle 40 zu vermeiden; jegliche solcher Tragteile oder Führungen weisen einen Abstand zu der Rolle 40 und insbesondere zu ihren Spreizrollen 186, 188 auf, um einen Spalt zu bilden, der wenigstens dem Abstand zwischen den Kanten der Führungsplatten 202, 204 zu der Rolle 40 entspricht, so daß jegliches Erntegut, das zwischen den Kanten der Führungsplatten 202, 204 und der Rolle 40 hindurch gelangt, nur durch diesen Spalt auf den Boden fällt.

Es wird folglich erkannt, daß der Abschnitt des Wickelmaterials 162 an den Führungsplatten 202, 204 in einer vollkommen gestreckten Weise ankommt, wo es breiter ist als der Abstand zwischen den Seitenwänden 22 und somit größer als der Abstand zwischen den Führungsplatten 202 und 204. Das Wickelmaterial 162 befindet sich in einem gespannten Zustand, wobei der mittlere Abschnitt des Wickelmaterials 162 mit dem Ballen 58 in Berührung kommt. Die Drehbewegung des Ballens 58 zusammen mit den sich bewegenden Riemen 42 bewirkt, daß die äußeren Randbereiche 181 des Wickelmaterials 162 in die Ballenbildungskammer 56 hineingezogen werden. Diese Randbereiche 181 bewegen sich durch einen Kanal oder Schacht, der von den Aussparungen 222 in den Führungsplatten 202, 204 und den Seitenwänden 22 definiert wird. Wenn auch diese Randbereiche 181 nicht so stark gespannt werden, wie der Rest des Wickelmaterials 162, wird in den Randbereichen 181 doch eine gewisse Spannung auftreten, und die Elastizität dieser Randbereiche 181 wird bewirken, daß die Randbereiche 181 stramm über die Kanten des Ballens 58 gezogen werden, wie dies in Figur 1 gezeigt ist.

In Figur 7 ist ein erstes alternatives Ausführungsbeispiel gezeigt, in dem die Aussparung 222 aus der Führungsplatte 204 entfernt und als eine Aussparung 222' ausgebildet ist, die sich in der Seitenwand 22 befindet. Nach diesem Aufbau wirkt eine Führungsplatte 204', die der Führungsplatte 204' ähnelt aber keine Aussparung 222 aufweist, mit der Aussparung 222' in der Seitenwand 22 zusammen, um einen Kanal oder Schacht zu bilden, durch den die Randbereiche 181 des Wickelmaterials 162 während des Wickelns des Ballens 58 hindurch gelangen.

Gemäß Figur 8 liegt ein weiteres alternatives Ausführungsbeispiel vor, in dem eine Seitenwand 22'' einen vorderen unteren Eckbereich 204'' aufweist, der so geformt ist, daß er innere Flächenteile definiert, die denen der Führungsplatten 204 gemäß Figur 4 ähnlich sind, und denen diesselben Bezugszeichen zugeordnet werden. Der Eckbereich 204'' dient dazu, einen Freiraum oder eine Lücke zwischen dem Umfangsbereich des Ballens 58 und der Seitenwand 22'' zu schaffen, und zwar wenigstens in einem Bereich, der einer vorlaufenden Kante des Eckbereichs 204'' folgt. Eine Öffnung 223 ist in der Seitenwand 22'' geschaffen, um den äußeren Randbereichen 181 des Wickelmaterials 162 einen Zugang zu diesem Bereich zu schaffen. Infolgedessen entfällt das Erfordernis separater Platten und Befestigungsteile.

Sobald eineinhalb bis zwei Lagen des Wickelmaterials 162 auf den Ballen 58 aufgewickelt sind, wird eine Trennvorrichtung 232 betätigt, um das gespannte Wickelmaterial 162 an einer Stelle zwischen den Zuführrollen 86 und 88 und der Erfassungsstelle 90 zu trennen, die zwischen den Riemen 42 und dem Wickelmaterialführungszusammenbau 92 gebildet ist. Wie dies in Figur 2 gezeigt ist, enthält die Trennvorrichtung 232 im einzelnen ein feststehendes Messer 234, das sich quer zwischen den vertikalen Tragwänden 84 erstreckt und eine nach oben weisende Schneide 236 aufweist, die sich unmittelbar unterhalb des Wegs erstreckt, der von dem Abschnitt des Wickelmaterials 162 eingenommen wird. Eine Kurbelwelle 238 mit einem Paar im allgemeinen L-förmiger amboß- oder bockartiger Stützarme 239, die an sie an entsprechenden Stellen nahe der sich gegenüberliegenden Seiten der Tragwände 84 angeschlossen sind, ist schwenkbar an die rückwärtige Kante der Tragwände 84 angeschlossen und erstreckt sich zwischen diesen, wobei sich die Stützarme 239 entlang der Tragwände 84 nach vorne erstrecken und an Stellen enden, die sich nahe der Riemen 42 und oberhalb der Ebene befinden, die tangential zu jeder der Zuführrollen 86, 88 verläuft. Ein winkelförmiger Amboß 240 erstreckt sich zwischen den vorderen Kanten der Stützarme 239 und ist an diese angeschlossen. An einer Stelle außerhalb des rechten Stützarms 239 ist ein sich aufrecht erstreckender Kurbelarm 242 an die Kurbelwelle 238 angeschlossen, an den das Abgabeende eines Linearbetätigers 244 angeschlossen ist, der einen Schwenkanschluß 246 mit einem Versteifungsteil aufweist, der auf der Außenseite der Seitenwand 22 des Ballenentladegatters 20 vorgesehen ist. Wenn der Ballen 58 mit der gewünschten Menge an Wickelmaterial 162 umwickelt wird, wird der Linearbetätiger 244 so beaufschlagt, daß er sich zurück zieht, um somit den Amboß 240 nach unten zu schwenken, so daß er den Abschnitt des Wickelmaterials 162 berührt und es in Anlage an der Schneide 236 des Messers 234 bringt. Der Ballen 58 dreht sich zu diesem Zeitpunkt noch, während der Antrieb der Zuführrollen 86, 88 unterbrochen wird. Die Spannung des Abschnitts des Wickelmaterials 162 erhöht sich daher, um so den Trennvorgang des Wickelmaterials 162 zu unterstützen.

Die Funktion der Wickelvorrichtung 70 scheint aus der obigen Beschreibung klar und wird aus Gründen der Kürze hier nicht wiederholt. Es erübrigt sich darauf hinzuweisen, daß, obwohl die Wickelvorrichtung 70 in der Lage ist, Wickelmaterialien verschiedener Art abzugeben, die Verwendung eines Wickelmaterials 162, wie es in der US-A-5,104,714 offenbart ist, zu einem Ballen 58 führt, der an seinem Umfang und seinen Stirnseiten stramm gewickelt ist und so eine gute Wasserabweischarakteristik aufweist, wenn das Wickelmaterial beim Aufwickeln auf den Ballen 58 um 15 % gestreckt wird. Fernerhin können die Führungsplatten 202, 204, die hier bei der Anwendung in einer größenveränderlichen Ballenbildungskammer 56 mit Riemen 42 gezeigt sind, auch in einer Festkammerpresse verwendet werden, wo sie nahe drehbarer Ballenbildungsmittel in der Nähe des Einlasses für das Wickelmaterial 162 angeordnet werden, der nicht notwendigerweise der Ernteguteinlaß ist. Außerdem kann die Funktion der Führungsplatten 202 und 204 durch die Benutzung von Führungsplatten erreicht werden, die wie die Führungsplatte 204' zusammen mit einer abgewandelten Seitenwand 22 ausgebildet sind, wobei anstatt der Führungsplatte die Seitenwand mit einer Öffnung versehen ist, um den äußeren Randbereich des Abschnitts des Wickelmaterials 162 zum Wickeln über die Enden des Ballens 58 in die Ballenbildungskammer 56 hineingelangen zu lassen. Das gleiche gilt für die in Figur 8 gezeigte Ausführungsform, bei der die innere Form der Führungsplatte 204 bei 204'' in der Seitenwand 22 nachgebildet ist, und zwar mit einer Öffnung 223, die in die Seitenwand 22'' eingeformt ist, um den Durchgang des äußeren Randbereichs 181 des Abschnitts des Wickelmaterials 162 passieren zu lassen.

Es wird ferner darauf hingewiesen, daß trotz der Beschreibung der Erfindung in Verbindung mit einer ausdehnbaren Ballenbildungskammer 56 die Führungsplatten 202 und 204 und die ersten und zweiten alternativen Ausführungsformen, wie sie in den Figuren 7 und 8 gezeigt sind, auch bei Festkammerpressen angewendet werden können, d. h. in Pressen, deren Ballenbildungskammern von ortsfesten Rollen oder ortsfesten Riemenförderabschnitten definiert werden, wobei die Führungsplatten 202 und 204 oder deren Alternativen nahe einer Öffnung der Ballenbildungskammer vorgesehen sind, die von den die Ballenbildungskammer bildenden Elementen definiert werden und in die das Wickelmaterial 162 eingeführt werden soll.

## Patentansprüche

1. Presse (10) mit einer Wickelvorrichtung (70) zum Umwickeln eines in einer Ballenbildungskammer (56) gebildeten Ballens (58) mit einem Wickelmaterial (162), das eine Breite aufweist oder einnehmen kann, die den Abstand zwischen den Seitenwänden (22) der Ballenbildungskammer (56) um Randbereiche (181) überschreitet, wobei:
an einem Einlaß (60) der Ballenbildungskammer (56) zur Einführung des Wickelmaterials (162) eine Rolle (40) vorgesehen ist, über die das Wickelmaterial (162) geführt wird,
die Rolle (40) ein oder mehrteilig ausgebildet ist und sich über die Seitenwände (22) hinaus erstreckt,
die Seitenwände (22) Öffnungen (222, 222', 223) aufweisen oder Spalte zu der Rolle (40) einhalten, durch die die Randbereiche (181) des Wickelmaterials in die Ballenbildungskammer (56) einführbar sind.

2. Presse nach Anspruch 1, gekennzeichnet durch wenigstens eine Führungsplatte (202, 204) in der Ballenbildungskammer (56), die einen von der betreffenden Seitenwand (22) beabstandeten Bereich (214) aufweist, an dem der Ballen (58) entlanggleitet und der stromaufwärts des Eintrittsbereichs des Randbereichs (181) des Wickelmaterials (162) vorgesehen ist.

3. Presse nach Anspruch 1 oder 2, dadurch gekennzeichnet, daß wenigstens ein Endbereich der Rolle (40) eine Spreizrolle (186, 188) enthält oder als solche ausgebildet ist.

4. Presse nach Anspruch 2 oder 3, dadurch gekennzeichnet, daß die Führungsplatte (202, 204) einen die Rolle (40) teilweise umfassenden gebogenen Randbereich (226) aufweist.

5. Presse nach einem oder mehreren der Ansprüche 2 bis 4, dadurch gekennzeichnet, daß die Führungsplatte (202, 204) bereichsweise einen Abstand zu der Seitenwand (22) aufweist, der dem Durchgang des Randbereichs (181) des Wickelmaterials (162) dient.

6. Presse nach einem oder mehreren der Ansprüche 3 bis 5, dadurch gekennzeichnet, daß die Spreizrolle (186, 188) Spiralnuten (190, 196) und/oder Spiralstege (194, 200) aufweist.

7. Presse nach Anspruch 6, dadurch gekennzeichnet, daß zwischen benachbarten Spiralstegen (194, 200) ein glatter Bereich (192, 198) vorgesehen ist, in den die Führungsplatte (202, 204) hineinragt und der zu dieser einen geringen Abstand aufweist.

8. Presse nach einem oder mehreren der vorherigen Ansprüche, dadurch gekennzeichnet, daß unterhalb der Spreizrolle (186, 188) keine Aufbauten oder dergleichen angeordnet sind.

9. Presse nach einem oder mehreren der vorherigen Ansprüche, gekennzeichnet durch ein Leitelement (228) nahe einer stromaufwärts der Spreizrolle (186, 188) gelegenen Umfangsfläche erstreckt.

10. Presse nach einem oder mehreren der Ansprüche 6 bis 9, dadurch gekennzeichnet, daß sich die Spiralnuten (190, 196) axial innen und die Spiralstege (194, 200) axial außen mit Bezug auf den glatten Bereich (192, 198) befinden.

11. Presse nach einem oder mehreren der vorherigen Ansprüche, dadurch gekennzeichnet, daß die Ballenbildungskammer (56) teilweise in einem Ballenentladegatter (20) vorgesehen ist und das Wickelmaterial (162) von Förderelementen, insbesondere von Riemen (42), in ihrem Bodenbereich gefördert wird, die über mehrere Rollen (38, 40) verlaufen, wobei wenigstens die Rolle (38) am Anfang der Förderstrecke und die Rolle (40) am Ende der Förderstrecke mit Spreizrollen (182, 186, 188) versehen ist.

12. Presse nach einem oder mehreren der vorherigen Ansprüche, dadurch gekennzeichnet, daß das Wickelmaterial (162) mittels Ballenformungsmitteln, insbesondere mittels Riemen (42), zwischen einer Materialrolle (112) und der Ballenbildungskammer (56) gefördert wird, wobei die Ballenformungsmittel wenigstens eine Rolle (38) am Anfang der Förderstrecke und eine Rolle (40) am Ende der Förderstrecke aufweisen, und wobei die Seitenwände (22) oberhalb der Förderstrecke enden.

13. Presse nach einem oder mehreren der vorherigen Ansprüche, dadurch gekennzeichnet, daß das Wickelmaterial (162) um im wesentlichen 15 % gestreckt wird.

14. Presse nach einem oder mehreren der vorherigen Ansprüche, dadurch gekennzeichnet, daß das Wickelmaterial (162) aus gewirkten Thermoplastfäden gebildet ist.

15. Presse nach einem oder mehreren der vorherigen Ansprüche, dadurch gekennzeichnet, daß die Öffnung (222', 223) in der Seitenwand (22) als Gleitfläche ausgebildet ist.

16. Presse nach einem oder mehreren der vorherigen Ansprüche, dadurch gekennzeichnet, daß ein Teilbereich der Seitenwände (22) entsprechend der Führungsplatte (202, 204) ausgebildet ist.

## Claims

1. A baler (10) with a wrapping device (70) for wrapping a bale (58) formed in a bale forming chamber (56) with a wrapping material (162), which has or can assume a width which exceeds the distance between the sidewalls (22) of the bale forming chamber (56) by edge regions (181);
wherein a roller (40) over which the wrapping material (162) is passed is provided at an inlet (60) of the bale forming chamber (56) for introducing the wrapping material (162), the roller (40) is made in one or more parts and extends beyond the sidewalls (22), the sidewalls (22) have openings (222, 222', 223) or have gaps from the roller (40), through which the edge regions (181) of the wrapping material can be introduced to the bale forming chamber (56).

2. A baler according to claim 1, characterized by at least one guide plate (202, 204) in the bale forming chamber (56), which has a region (214) spaced from the respective sidewall (22), on which the bale (58) slides and which is provided upstream of the region where the edge region (181) of the wrapping material (162) enters.

3. A baler according to claim 1 or 2, characterized in that at least one end region of the roller (40) includes or is formed as a spreader roller (186, 188).

4. A baler according to claim 2 or 3, characterized in that the guide plate (202, 204) has a curved edge region partially surrounding the roller (40).

5. A baler according to one or more of claims 2 to 4, characterized in that the guide plate (202, 204) has a region spaced from the sidewall (22) to serve for the passage of the edge region (181) of the wrapping material (162).

6. A baler according to one or more of claims 3 to 5, characterized in that the spreader roller (186, 188) has spiral grooves (190, 196) and/or spiral ribs (194, 200).

7. A baler according to claim 6, characterized in that a smooth region (192, 198) is provided between adjacent spiral ribs (194, 200), into which region the guide plate (202, 204) projects and from which it has small spacing.

8. A baler according to one or more of the preceding claims, characterized in that no structural parts or the like are provided below the spreader roller (186, 188).

9. A baler according to one or more of the preceding claims, characterized by a guide element (228) which extends near to an upstream peripheral surface of the spreader roller (186, 188).

10. A baler according to one or more of claims 6 to 9, characterized in that the spiral grooves (190, 196) and the spiral ribs (194, 200) lie respectively axially inside and axially outside the smooth region (192, 198).

11. A baler according to one or more of the preceding claims, characterized in that the bale forming chamber (56) is provided in part in a bale discharge gate (20) and the wrapping material (162) is passed into its bottom region by conveyor elements, especially belts (42), which run over a plurality of rollers (38, 40), wherein at least the roller (38) at the start of the feed path and roller (40) at the end of the feed path are provided with spreader rollers (182, 186, 188).

12. A baler according to one or more of the preceding claims, characterized in that the wrapping material (162) is fed by bale forming means, especially by means of belts (42), between a material roll (112) and the bale forming chamber (56), wherein the bale forming means comprise at least one roller (38) at the start of the feed path and a roller (40) at the end of the feed path, and wherein the sidewalls (22) terminate above the feed path.

13. A baler according to one or more of the preceding claims, characterized in that the wrapping material (162) is stretched by substantially 15%.

14. A baler according to one or more of the preceding claims, characterized in that the wrapping material (162) is made from knitted thermoplastic threads.

15. A baler according to one or more of the preceding claims, characterized in that the opening (222' 223) in the sidewall (22) is in the form of a slide surface.

16. A baler according to one or more of the preceding claims, characterized in that a part region of the sidewall (22) is formed in accordance with the guide plate (202, 204).

## Revendications

1. Presse (10) comportant un dispositif d'enveloppement (70) servant à envelopper une balle (58), formée dans une chambre (56) de formation de la balle, avec un matériau d'enveloppement (162), qui possède ou peut prendre une largeur, qui est supérieure à la distance entre les parois latérales (22) de la chambre (56) de formation de la balle, autour de zones marginales (181), et dans laquelle:
un rouleau (40), sur lequel le matériau d'enveloppement (162) est guidé, est prévu au niveau d'une entrée (60) de la chambre (56) de formation de la balle pour l'introduction du matériau d'enveloppement (162),
le rouleau (40) est agencé sous la forme d'un ou de plusieurs éléments et s'étend au-delà des parois latérales (22),
les parois latérales (22) possèdent des ouvertures (222, 222', 223) ou définissent des fentes par rapport au rouleau (40), par lesquelles les parties marginales (181) du matériau d'enveloppement peuvent être introduites dans la chambre (56) de formation de la balle.

2. Presse selon la revendication 1, caractérisée par au moins une plaque de guidage (202,204) disposée dans la chambre (56) de formation de la balle et qui possède une partie (214) qui est distante de la paroi latérale (22) considérée et contre laquelle la balle (58) glisse et qui est disposée en amont de la zone d'entrée de la partie marginale (181) du matériau d'enveloppement (162).

3. Presse selon la revendication 1 ou 2, caractérisée en ce qu'au moins une partie d'extrémité du rouleau (40) contient un galet d'écartement (186,188) ou est agencée en tant que telle.

4. Presse selon la revendication 2 ou 3, caractérisée en ce que la plaque de guidage (202,204) comporte une partie marginale coudée (226) qui entoure partiellement le rouleau (40) .

5. Presse selon une ou plusieurs des revendications 2 à 4, caractérisée en ce que la plaque de guidage (202,204) est séparée par endroits, de la paroi latérale (22), par une distance qui permet le passage de la partie marginale (181) du matériau d'enveloppement (162).

6. Presse selon une ou plusieurs des revendications 3 à 5, caractérisée en ce que le galet d'écartement (186,188) possède des rainures hélicoidales (190,196) et/ou des barrettes hélicoidales (194,200).

7. Presse selon la revendication 6, caractérisée en ce qu'entre des barrettes hélicoïdales voisines (194, 200) est prévue une partie lisse (192,198), dans laquelle la plaque de guidage (202,204) pénètre et qui est séparée de cette plaque par une faible distance.

8. Presse selon une ou plusieurs des revendications précédentes, caractérisée en ce qu'aucune structure ou analogue n'est disposée au-dessous du galet d'écartement (186,188).

9. Presse selon une ou plusieurs des revendications précédentes, caractérisée par un élément de guidage (228), qui s'étend à proximité d'une surface périphérique située en amont du galet d'écartement (186, 188).

10. Presse selon une ou plusieurs des revendications 6 à 9, caractérisée en ce que les rainures hélicoïdales (190,196) sont situées axialement à l'intérieur et les barrettes hélicoïdales (194,200) sont situées axialement à l'extérieur de la partie lisse (192,198).

11. Presse selon une ou plusieurs des revendications précédentes, caractérisée en ce que la chambre (56) de formation de la balle est prévue en partie dans une porte (20) de déchargement de la balle et le matériau d'enveloppement (162) est entraîné, au niveau de la base de la chambre, par des éléments d'entraînement, notamment des courroies (42), qui circulent sur plusieurs rouleaux (38,40), au moins le rouleau (38) comportant, au début de la section d'entraînement, et le rouleau (40) comportant, à la fin de la section d'entraînement, des galets d'écartement (182,186,188).

12. Presse selon une ou plusieurs des revendications précédentes, caractérisée en ce que le matériau d'enveloppement (162) est entraîné à l'aide de moyens de formation de la balle, notamment à l'aide de courroies (42), entre un rouleau de matériau (112) et la chambre (56) de formation de la balle, les moyens de formation de la balle comportant au moins un rouleau (38) situé au début de la section d'entraînement et un rouleau (40) situé à la fin de la section d'entraînement, et les parois latérales (22) se terminant au-dessus de la section d'entraînement.

13. Presse selon une ou plusieurs des revendications précédentes, caractérisée en ce que le matériau d'enveloppement (162) est étiré essentiellement de 15 %.

14. Presse selon une ou plusieurs des revendications précédentes, caractérisée en ce que le matériau d'enveloppement (162) est formé de fils thermoplastiques tricotés.

15. Presse selon une ou plusieurs des revendications précédentes, caractérisée en ce que l'ouverture (222', 223) dans la paroi latérale (22) est agencée sous la forme d'une surface lisse.

16. Presse selon une ou plusieurs des revendications précédentes, caractérisée en ce qu'une partie des parois latérales (22) est agencée d'une manière correspondant à la plaque de guidage (202,204).
